# EUROPÄISCHE PATENTANMELDUNG

(11) **EP 3 779 790 A1**
(43) Veröffentlichungstag der Anmeldung: **17.02.2021**
(21) Anmeldenummer: 20189726.1
(22) Anmeldetag: 06.08.2020
(51) Int. Cl.: G06K 9/62, G06T 7/00

(54) **OPTISCHE QUALITÄTSKONTROLLE**

(30) Priorität: 13.08.2019 EP 19191387
(71) Anmelder: Bayer AG, 51373 Leverkusen (DE)
(72) Erfinder: Dr. Radmer, Jochen, 10963 Berlin (DE)
(74) Vertreter: BIP Patents

(57) **Zusammenfassung**

Die vorliegende Erfindung beschäftigt sich mit der optischen Qualitätskontrolle von Objekten. Gegenstände der vorliegenden Erfindung sind ein Verfahren, eine Vorrichtung, ein System und ein Computerprogrammprodukt zum Erzeugen eines Trainings- und/oder Validierungsdatensatzes für einen selbstlernenden Algorithmus zur Klassierung von Objekten mittels überwachten Lernens.

## Beschreibung

Die vorliegende Erfindung beschäftigt sich mit der optischen Qualitätskontrolle von Objekten.

Qualitätskontrollen spielen in vielen Bereichen der Industrie eine wichtige Rolle. Bei der Qualitätskontrolle wird geprüft, ob ein Objekt wie beispielsweise ein Produkt oder ein Rohstoff vordefinierte Qualitätskriterien erfüllt. Die vordefinierten Qualitätskriterien (definierte Vorgaben) stellen den Soll-Zustand dar. Bei der Qualitätskontrolle wird mindestens ein Merkmal des jeweiligen Objekts geprüft. Das mindestens eine Merkmal zeigt den Ist-Zustand des Objekts an. In einem weiteren Schritte wird der Ist-Zustand mit dem Soll-Zustand verglichen. Der Soll-Zustand ist üblicherweise durch einen oder mehrere Parameterbereiche für das mindestens eine Merkmal festgelegt. Liegt der Ist-Parameter für das mindestens eine Merkmal innerhalb dieses Bereichs bzw. liegen die mehreren Ist-Parameter innerhalb dieser Bereiche, erfüllt das Objekt die Qualitätskriterien. Anderenfalls erfüllt es die entsprechenden Qualitätskriterien nicht. Für ein Produkt kann die Nichterfüllung der Qualitätskriterien ggf. bedeuten, dass es nicht in den Verkehr gebracht werden darf. Für einen Rohstoff kann die Nichterfüllung der Qualitätskriterien ggf. bedeuten, dass der Rohstoff nicht eingesetzt werden sollte. Ziel einer Qualitätskontrolle kann somit sein, Objekte, die eine definierte Spezifikation nicht erfüllen, auszusortieren.

Bei der optischen Qualitätskontrolle wird mindestens ein Merkmal eines Objekts geprüft, das mit der Wechselwirkung des Objekts mit elektromagnetischer Strahlung vorzugsweise im sichtbaren Wellenlängenbereich (etwa 380 nm bis 780 nm) zusammenhängt. Beispiele von solchen optischen Merkmalen sind räumliche und / oder zeitliche Ausprägungen von Farbe, Textur, Absorptionsvermögen, Reflektivität und dergleichen. Die optische Qualitätskontrolle erfolgt in der Regel berührungslos, indem das Objekt mit einer Quelle für elektromagnetische Strahlung bestrahlt und die vom Objekt zurückgeworfene und/oder die durch das Objekt hindurchgetretene Strahlung mit einem Sensor aufgefangen und das Sensorsignal analysiert wird.

Oftmals werden bei der optischen Qualitätskontrolle als Sensoren Kameras verwendet, die zweidimensionale Abbilder aus Licht auf elektrischem Weg aufnehmen. Üblicherweise handelt es sich um halbleiterbasierte Bildsensoren wie beispielsweise CCD- (CCD = *charge-coupled device*) oder CMOS-Sensoren (CMOS = *complementary metal-oxide-semiconductor*). Mit Hilfe von solchen Kameras können digitale Bildaufnahmen der Objekte erzeugt werden.

In vielen Bereichen erfolgt die optische Qualitätskontrolle halbautomatisch. In einem ersten, automatisch ablaufenden Schritt wird von einem zu prüfenden Objekt ein optisches Merkmal ermittelt und dieses mit einer definierten Vorgabe verglichen. Diejenigen Objekte, bei denen das optische Merkmal die definierte Vorgabe nicht erfüllt, werden ausgesondert und in einem zweiten, nicht-automatisierten Schritt durch geschultes Personal visuell nachkontrolliert. Eine solche Nachkontrolle ist oftmals nötig, da das automatische System oftmals so konfiguriert ist, dass es eher ein Objekt zu viel aussondert als ein Objekt zu wenig. Um letztlich aber möglichst wenige Objekte auszusondern, werden die automatisch ausgesonderten Objekte nachkontrolliert, indem sie von einem Menschen visuell geprüft werden. Ein solches Vorgehen kann Ziel eines validierten Prozesses zur optischen Qualitätskontrolle gemäß GMP (*Good Manufacturing Practice*) sein. Diejenigen Objekte, die von dem automatischen ersten Schritt ausgesondert worden sind, die aber gemäß der Einschätzung des Menschen hätten nicht ausgesondert werden müssen, können wieder zurückgeführt werden.

Wie in vielen industriellen Bereichen werden auch im Bereich der optischen Qualitätskontrolle zunehmend Systeme eingesetzt, die auf künstlicher Intelligenz beruhen. Darunter fallen so genannte selbstlernende Systeme, die beispielsweise mittels überwachten Lernens trainiert werden können, eine Klassierung von Objekten auf Basis optischer Merkmale vorzunehmen.

Gegenstände der vorliegenden Erfindung sind ein Verfahren, eine Vorrichtung, ein System und ein Computerprogrammprodukt zum Erzeugen eines Trainings- und/oder Validierungsdatensatzes für einen selbstlernenden Algorithmus zur Klassierung von Objekten mittels überwachten Lernens.

Die Gegenstände der vorliegenden Erfindung sind in den unabhängigen Patentansprüchen definiert. Bevorzugte Ausführungsformen finden sich in den abhängigen Patentansprüchen, in der vorliegenden Beschreibung sowie in den Zeichnungen.

Ein erster Gegenstand der vorliegenden Erfindung ist ein Verfahren umfassend die folgenden Schritte:
- Klassieren von Objekten in mindestens zwei Klassen, eine erste Klasse und eine zweite Klasse, wobei die erste Klasse diejenigen Objekte beinhaltet, die mindestens eine definierte Vorgabe erfüllen und die zweite Klasse diejenigen Objekte beinhaltet, die einer visuellen Kontrolle unterzogen werden sollen,
- Erzeugen von digitalen Bildaufnahmen von den Objekten
- Kennzeichnen der Bildaufnahmen der Objekte der ersten Klasse mit einer ersten Kennzeichnung, wobei die erste Kennzeichnung anzeigt, dass die Objekte auf den Bildaufnahmen die mindestens eine definierte Vorgabe erfüllen,
- Zuführen der Bildaufnahmen der Objekte der zweiten Klasse einer visuellen Kontrolle,
- Empfangen eines Ergebnis der visuellen Kontrolle für Objekte der zweiten Klasse, wobei das Ergebnis angibt, ob das jeweilige Objekt die mindestens eine definierte Vorgabe erfüllt oder die mindestens eine definierte Vorgabe nicht erfüllt,
- Kennzeichnen der Bildaufnahmen der Objekte der zweiten Klasse mit einer Kennzeichnung, wobei die Bildaufnahmen derjenigen Objekte, für die das Ergebnis angibt, dass das Objekt die mindestens eine definierte Vorgabe erfüllt, mit der ersten Kennzeichnung gekennzeichnet werden, und die Bildaufnahmen derjenigen Objekte, für die das Ergebnis angibt, dass das Objekt die mindestens eine definierte Vorgabe nicht erfüllt, mit einer zweiten Kennzeichnung gekennzeichnet werden,
- Speichern der gekennzeichneten Bildaufnahmen in einem Datenspeicher und/oder Trainieren und/oder Validieren eines selbstlernenden Modells zur Klassierung von Objekten mit den gekennzeichneten Bildaufnahmen.

Ein weiterer Gegenstand der vorliegenden Erfindung ist eine Vorrichtung umfassend
- eine Empfangseinheit,
- eine Steuer- und Recheneinheit und
- eine Ausgabeeinheit,
   - wobei die Steuer- und Recheneinheit konfiguriert ist, die Empfangseinheit zu veranlassen, digitale Bildaufnahmen zu empfangen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
   - wobei die Steuer- und Recheneinheit konfiguriert ist, die Bildaufnahmen der Objekte der ersten Klasse mit einer ersten Kennzeichnung zu versehen, wobei die erste Kennzeichnung anzeigt, dass die Objekte auf den Bildaufnahmen die mindestens eine definierte Vorgabe erfüllen,
   - wobei die Steuer- und Recheneinheit konfiguriert ist, die Ausgabeeinheit zu veranlassen, die Bildaufnahmen der Objekte der zweiten Klasse gegenüber einem Nutzer anzuzeigen,
   - wobei die Steuer- und Recheneinheit konfiguriert ist, die Empfangseinheit zu veranlassen vom Nutzer zu angezeigten Bildaufnahmen eine Information zu empfangen, wobei die Information angibt, ob das jeweilige Objekt die mindestens eine definierte Vorgabe erfüllt oder die mindestens eine definierte Vorgabe nicht erfüllt,
   - wobei die Steuer- und Recheneinheit konfiguriert ist, auf Basis der empfangenen Information die jeweils angezeigte Bildaufnahme mit einer Kennzeichnung zu versehen, wobei die Bildaufnahme desjenigen Objekts, für das die Information angibt, dass das Objekt die mindestens eine definierte Vorgabe erfüllt, mit der ersten Kennzeichnung versehen wird, und die Bildaufnahme desjenigen Objekts, für das die Information angibt, dass das Objekt die mindestens eine definierte Vorgabe nicht erfüllt, mit einer zweiten Kennzeichnung gekennzeichnet wird,
   - wobei die Steuer- und Recheneinheit konfiguriert ist, die Ausgabeeinheit zu veranlassen, die gekennzeichneten Bildaufnahmen in einem Datenspeicher zu speichern und/oder als Trainings- und/oder Validierungsdatensatz einem selbstlernenden Modell zur Klassierung von Objekten zuzuführen.

Ein weiterer Gegenstand der vorliegenden Erfindung ist ein System umfassend eine Kamera zur Erzeugung von digitalen Bildaufnahmen von Objekten und eine erfindungsgemäße Vorrichtung.

Ein weiterer Gegenstand der vorliegenden Erfindung ist ein Computerprogrammprodukt umfassend ein Computerprogramm, das in einen Arbeitsspeicher eines Computers geladen werden kann und dort den Computer dazu veranlasst, folgende Schritte auszuführen:
- Empfangen von digitalen Bildaufnahmen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
- Versehen der digitalen Bildaufnahmen derjenigen Objekte, die der ersten Klasse zugeordnet sind, mit einer ersten Kennzeichnung, wobei die erste Kennzeichnung anzeigt, dass die Objekte auf den Bildaufnahmen die mindestens eine definierte Vorgabe erfüllen,
- Anzeigen der digitalen Bildaufnahmen derjenigen Objekte, die der zweiten Klasse zugordnet sind, gegenüber einem oder mehreren Nutzern,
- Empfangen einer Information für jede angezeigte digitale Bildaufnahme von dem einen oder den mehreren Nutzern, wobei die Information angibt, ob das jeweilige Objekt die mindestens eine definierte Vorgabe erfüllt oder die mindestens eine definierte Vorgabe nicht erfüllt,
- Versehen der angezeigten digitalen Bildaufnahme mit einer Kennzeichnung, wobei die Bildaufnahmen derjenigen Objekte, für die die Information angibt, dass die Objekte die mindestens eine definierte Vorgabe erfüllen, mit der ersten Kennzeichnung versehen werden, und die Bildaufnahmen derjenigen Objekte, für die die Information angibt, dass die Objekte die mindestens eine definierte Vorgabe nicht erfüllen, mit einer zweiten Kennzeichnung gekennzeichnet werden,
- Speichern der gekennzeichneten Bildaufnahmen in einem Datenspeicher und/oder Zuführen der Bildaufnahmen mit den jeweiligen Kennzeichnungen einem selbstlernenden Modell zur Klassierung von Objekten als Trainings- und/oder Validierungsdatensatz.

Die Erfindung wird nachstehend näher erläutert, ohne zwischen den Erfindungsgegenständen (Verfahren, Vorrichtung, System, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Vorrichtung, System, Computerprogrammprodukt) sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

Ein Ziel der vorliegenden Erfindung ist die Erzeugung eines Trainings- und/oder Validierungsdatensatzes für ein System zur automatischen Klassierung von Objekten auf Basis eines selbstlernenden Algorithmus.

Ein Objekt im Sinne der vorliegenden Erfindung ist ein körperlicher Gegenstand. Dabei kann es sich z.B. um einen Rohstoff, ein Zwischenprodukt, ein Produkt, ein Abfallprodukt, ein Werkzeug, eine Verpackung oder dergleichen handeln. Das Objekt kann ein unbelebtes Objekt sein, es kann aber auch ein lebendes Objekt wie beispielsweise eine Pflanze sein. Denkbar ist auch, dass das Objekt eine Ansammlung oder ein Verbund von mehreren Einzelobjekten ist. Denkbar ist ferner, dass das Objekt lediglich ein Bestandteil eines körperlichen Gegenstandes ist.

In einem ersten Schritt wird eine Mehrzahl von Objekten einer automatisierten Klassierung zugeführt.

Der Begriff Klassierung oder auch Klasseneinteilung bezeichnet die Einteilung von Objekten in getrennte Gruppen (Klassen).

Bei der Klassierung gemäß der vorliegenden Erfindung wird jedes Objekt genau einer von mindestens zwei Klassen zugeordnet. Die Zahl der Klassen liegt vorzugsweise im Bereich von zwei bis zehn, mehr bevorzugt im Bereich von zwei bis fünf, noch mehr bevorzugt im Bereich von zwei bis vier. In einer besonders bevorzugten Ausführungsform beträgt die Zahl der Klassen genau zwei oder drei.

Die Klassierung erfolgt automatisch, d.h. ohne das Zutun eines Menschen.

Die Klassierung erfolgt auf Basis eines oder mehrerer Merkmale. Das mindestens eine Merkmal des Objekts bestimmt damit, in welche Klasse das jeweilige Objekt einsortiert wird. Bei dem mindestens einen Merkmal handelt es sich um ein optisches Merkmal, d.h. es wird mit Hilfe eines optischen Sensors oder mehrerer optischer Sensoren ermittelt.

Ein "Sensor", auch als Detektor, (Messgrößen- oder Mess-)Aufnehmer oder (Mess-)Fühler bezeichnet, ist ein technisches Bauteil, das bestimmte physikalische Eigenschaften und/oder die stoffliche Beschaffenheit seiner Umgebung qualitativ oder als Messgröße quantitativ erfassen kann. Die jeweilige Messgröße wird mittels eines physikalischen Effekts erfasst und in ein weiterverarbeitbares, meist elektrisches Signal umgeformt.

Ein optischer Sensor empfängt die von einem Objekt ausgesandte und/oder reflektierte und/oder gestreute und/oder durch das Objekt hindurchgetretene elektromagnetische Strahlung in einem definierten Wellenlängenbereich und wandelt diese in ein elektrisches Signal um.

Mit Hilfe eines optischen Sensors kann somit mindestens ein optisches Merkmal eines Objekts ermittelt und es können die Informationen zum optischen Merkmal zur weiteren Verarbeitung verfügbar gemacht werden.

Das mindestens eine optische Merkmal charakterisiert den Ist-Zustand des Objekts. Der Ist-Zustand wird mit einer definierten Vorgabe, dem Soll-Zustand verglichen. Die Klassierung eines Objekts in eine der mindestens zwei Klassen erfolgt auf Basis des Ergebnisses des Vergleichs. Einer ersten Klasse werden diejenigen Objekte zugordnet, bei denen der Ist-Zustand die definierte Vorgabe erfüllt, der Ist-Zustand also dem Soll-Zustand entspricht. Der zweiten Klasse werden diejenigen Objekte zugeordnet, bei denen eine definierte Wahrscheinlichkeit besteht, dass der Ist-Zustand die definierte Vorgabe erfüllt bzw. nicht erfüllt. Für die Objekte der zweiten Klasse besteht damit eine definierte Wahrscheinlichkeit, dass sie zu einem späteren Zeitpunkt der ersten Klasse zugeordnet werden oder anders ausgedrückt: für die Objekte der zweiten Klasse besteht eine gewisse Unsicherheit, ob sie die definierte Vorgabe erfüllen oder nicht. Für die Objekte der zweiten Klasse ist also eine visuelle Nachkontrolle durch einen Menschen erforderlich. Die visuelle Nachkontrolle erfolgt jedoch nicht (allein) anhand der Objekte selbst sondern anhand von digitalen Bildaufnahmen der Objekte, wie weiter unten beschrieben ist.

Denkbar ist, dass es neben der ersten und der zweiten Klasse eine dritte Klasse gibt, wobei der dritten Klasse diejenigen Objekte zugeordnet werden, bei denen der Ist-Zustand die definierte Vorgabe (definitiv) nicht erfüllt, der Ist-Zustand also (definitiv) nicht dem Soll-Zustand entspricht.

In einem weiteren Schritt werden von den Objekten digitale Bildaufnahmen erzeugt. Üblicherweise zeigt eine digitale Bildaufnahme genau ein Objekt oder einen Teil eines Obbjekts. Es ist denkbar, dass von einem Objekt mehrere digitale Bildaufnahmen erzeugt werden.

Die Erzeugung der digitalen Bildaufnahmen kann vor, während oder nach der automatisierten Klassierung erfolgen. Die Erzeugung der digitalen Bildaufnahmen erfolgt üblicherweise mit einer Digitalkamera.

Die Bildaufnahmen der Objekte erlauben eine visuelle Überprüfung durch einen Menschen, ob das jeweilige Objekt die definierte Vorgabe erfüllt oder nicht; das bedeutet, dass in der digitalen Bildaufnahme das optische Merkmal des jeweiligen Objekts für einen Menschen visuell erkennbar ist.

In einem weiteren Schritt werden die Bildaufnahmen der Objekte der ersten Klasse mit einer ersten Kennzeichnung versehen. Die erste Kennzeichnung zeigt an, dass die Objekte auf den Bildaufnahmen die mindestens eine definierte Vorgabe erfüllen.

Eine solche Kennzeichnung ist eine Information, die zusammen mit der digitalen Bildaufnahme oder als Teil der digitalen Bildaufnahme in einem Datenspeicher für digitale Informationen gespeichert werden kann. Es ist beispielsweise denkbar, dass es sich bei der Kennzeichnung um einen alphanumerischen oder binären oder hexadezimalen oder anderen Code handelt, der beispielsweise in den Header der Datei, die die digitale Bildaufnahme beinhaltet, eingeschrieben wird.

Die Bildaufnahmen, welche die Objekte der zweiten Klasse zeigen, werden einem Menschen oder mehreren Menschen zur visuellen Überprüfung zugeführt. Üblicherweise werden die digitalen Bildaufnahmen auf einem Monitor gegenüber einem Menschen (der in dieser Beschreibung auch als Nutzer bezeichnet wird) oder gegenüber mehreren Menschen (mehreren Nutzern) angezeigt. Denkbar ist auch, dass Bildaufnahmen der Objekte der ersten Klasse gegenüber einem oder mehreren Menschen zur visuellen Kontrolle angezeigt werden.

Der mindestens eine Mensch erhält die Aufgabe, die digitalen Bildaufnahmen zu sichten und zu entscheiden, ob das in der jeweiligen digitalen Bildaufnahme gezeigte Objekt die definierte Vorgabe erfüllt oder die definierte Vorgabe nicht erfüllt. Das Ergebnis der jeweiligen Entscheidung wird in Form einer Kennzeichnung festgehalten. Es ist denkbar, dass der mindestens eine Mensch zur Erfüllung der Aufgabe auch das in der jeweiligen digitalen Bildaufnahme gezeigte Objekt zur Erfüllung der Aufgabe in Augenschein nimmt.

Kommt der mindestens eine Mensch zu dem Ergebnis, dass ein Objekt die definierte Vorgabe erfüllt, so wird die digitale Bildaufnahme, die das jeweilige Objekt zeigt, mit der ersten Kennzeichnung versehen.

Kommt der mindestens eine Mensch zu dem Ergebnis, dass ein Objekt die definierte Vorgabe nicht erfüllt, so wird die digitale Bildaufnahme, die das jeweilige Objekt zeigt, mit einer zweiten Kennzeichnung versehen.

Die zweite Kennzeichnung gibt also an, dass das in der digitalen Bildaufnahme gezeigte Objekt die definierte Vorgabe nicht erfüllt.

Das Kennzeichnen einer Bildaufnahme mit der zweiten Kennzeichnung erfolgt analog zum Kennzeichnen einer Bildaufnahme mit der ersten Kennzeichnung.

Werden Bildaufnahmen mehreren Menschen zur visuellen Überprüfung zugeführt, werden die Bewertungsergebnisse zusammengefasst. Dabei sind mehrere Möglichkeiten denkbar: es ist zum Beispiel denkbar, dass immer dann, wenn eine Mehrheit der Ansicht ist, die definierte Vorgabe sei nicht erfüllt, die Bildaufnahme mit dem zweiten Kennzeichen versehen wird. Denkbar ist ferner, dass immer dann, wenn auch nur ein Mensch der Ansicht ist, die definierte Vorgabe sei nicht erfüllt, die Bildaufnahme mit dem zweiten Kennzeichen versehen wird. Denkbar ist ferner, dass immer dann, wenn zwei Menschen eine unterschiedliche Beurteilung abgeben, die entsprechende Bildaufnahme einem dritten Menschen zur finalen Beurteilung zugeführt wird. Weitere Möglichkeiten sind denkbar.

Denkbar ist auch, dass die Erfindung so ausgestaltet ist, dass Objekte, die eine erste definierte Vorgabe erfüllen, jeweils mit einer ersten Kennzeichnung versehen werden, und Objekte, die eine zweite definierte Vorgabe erfüllen, jeweils mit einer zweiten Kennzeichnung versehen werden. Ferner ist denkbar, dass es mehr als zwei Kennzeichnungen und/oder mehr als zwei definierte Vorgaben gibt. Objekte, die keine der definierten Vorgaben erfüllen, werden ebenfalls mit einem entsprechenden Kennzeichen versehen. Die weiteren Schritte erfolgen dann analog zu den in dieser Besvhreibung beschriebenen Schritten.

Das Ergebnis des Kennzeichnens der Bildaufnahmen ist ein Satz so genannter annotierter (gekennzeichneter) Bildaufnahmen (*labelled images).* Für die jeweilige Bildaufnahme ist in einer maschinell verarbeitbaren Weise eine Information darüber vorhanden, ob die Bildaufnahme ein Objekt zeigt, dass eine definierte Vorgabe erfüllt oder die definierte Vorgabe nicht erfüllt.

Dieser Satz annotierter Bildaufnahmen kann in einem Datenspeicher zur weiteren Verwendung gespeichert werden.

Dieser Satz annotierter Bildaufnahmen kann ferner zum Trainieren und/oder Validieren eines selbstlernenden Algorithmus verwendet werden.

Weitere Gegenstände der vorliegenden Erfindung sind damit ein Verfahren, eine Vorrichtung, ein System und ein Computerprogrammprodukt zum Trainieren und/oder Validieren eines selbstlernenden Algorithmus zur Klassierung von Objekten.

Ein selbstlernender Algorithmus erzeugt beim maschinellen Lernen ein statistisches Modell, das auf den Trainingsdaten beruht. Das heißt, es werden nicht einfach die Beispiele auswendig gelernt, sondern der Algorithmus "erkennt" Muster und Gesetzmäßigkeiten in den Trainingsdaten. So kann der Algorithmus auch unbekannte Daten beurteilen. Validierungsdaten können verwendet werden, um die Güte der Beurteilung unbekannter Daten zu prüfen.

Das Trainieren des selbstlernenden Algorithmus erfolgt mittels überwachten Lernens (engl.: *supervised learning*), d.h. dem Algorithmus werden nacheinander Bildaufnahmen präsentiert und es wird ihm mitgeteilt, mit welcher Kennzeichnung die jeweilige Bildaufnahme versehen ist. Der Algorithmus lernt dann eine Beziehung zwischen den Bildaufnahmen und den jeweiligen Kennzeichnungen herzustellen, um für unbekannte Bildaufnahmen eine Kennzeichnung vorherzusagen.

Selbstlernende Algorithmen, die mittels überwachten Lernens trainiert werden, sind vielfältig im Stand der Technik beschrieben (siehe z.B. C. Perez: Machine Learning Techniques: Supervised Learning and Classification, Amazon Digital Services LLC - Kdp Print Us, 2019, ISBN 1096996545, 9781096996545).

Vorzugsweise handelt es sich bei dem selbstlernenden Algorithmus um ein künstliches neuronales Netz.

Ein solches künstliches neuronales Netzwerk umfasst mindestens drei Schichten von Verarbeitungselementen: eine erste Schicht mit Eingangsneuronen (Knoten), eine N-te Schicht mit mindestens einem Ausgangsneuron (Knoten) und N-2 innere Schichten, wobei N eine natürliche Zahl und größer als 2 ist.

Die Eingangsneuronen dienen zum Empfangen von digitalen Bildaufnahmen als Eingangswerte. Normalerweise gibt es ein Eingangsneuron für jedes Pixel einer digitalen Bildaufnahme. Es können zusätzliche Eingangsneuronen für zusätzliche Eingangswerte (z.B. Bedingungen, die bei der Erzeugung der jeweiligen Bildaufnahme herrschten, weitere Informationen zu den Objekten) vorhanden sein.

In einem solchen Netzwerk dienen die Ausgangsneuronen dazu, für eine digitale Bildaufnahme eine Kennzeichnung vorherzusagen, wobei die Kennzeichnung angibt, ob das in der digitalen Bildaufnahme gezeigte Objekt eine definierte Vorgabe erfüllt oder nicht erfüllt.

Die Verarbeitungselemente der Schichten zwischen den Eingangsneuronen und den Ausgangsneuronen sind in einem vorbestimmten Muster mit vorbestimmten Verbindungsgewichten miteinander verbunden.

Vorzugsweise handelt es sich bei dem künstlichen neuronalen Netz um ein so genanntes Convolutional Neural Network (kurz: CNN).

Ein Convolutional Neural Network ist in der Lage, Eingabedaten in Form einer Matrix zu verarbeiten. Dies ermöglicht es, als Matrix dargestellte digitale Bildaufnahmen (Breite x Höhe x Farbkanäle) als Eingabedaten zu verwenden. Ein normales neuronales Netz z.B. in Form eines Multi-Layer-Perceptrons (MLP) benötigt dagegen einen Vektor als Eingabe, d.h. um eine Bildaufnahme als Eingabe zu verwenden, müssten die Pixel des Bildes in einer langen Kette hintereinander ausgerollt werden. Dadurch sind normale neuronale Netze z.B. nicht in der Lage, Objekte in einem Bild unabhängig von der Position des Objekts im Bild zu erkennen. Das gleiche Objekt an einer anderen Position im Bild hätte einen völlig anderen Eingabevektor.

Ein CNN besteht im Wesentlichen aus Filtern (Convolutional Layer) und Aggregations-Schichten (Pooling Layer), die sich abwechselnd wiederholen, und am Ende aus einer Schicht oder mehreren Schichten von "normalen" vollständig verbundenen Neuronen (Dense / Fully Connected Layer).

Details sind dem Stand der Technik zu entnehmen (siehe z.B.: S. Khan et al.: A Guide to Convolutional Neural Networks for Computer Vision, Morgan & Claypool Publishers 2018, ISBN 1681730227, 9781681730226).

Das Trainieren des neuronalen Netzes kann beispielsweise mittels eines Backpropagation-Verfahrens durchgeführt werden. Dabei wird für das Netz eine möglichst zuverlässige Abbildung von gegebenen Eingabevektoren auf gegebene Ausgabevektoren angestrebt. Die Qualität der Abbildung wird durch eine Fehlerfunktion beschrieben. Das Ziel ist die Minimierung der Fehlerfunktion. Das Einlernen eines künstlichen neuronalen Netzes erfolgt bei dem Backpropagation-Verfahren durch die Änderung der Verbindungsgewichte .

Im trainierten Zustand enthalten die Verbindungsgewichte zwischen den Verarbeitungselementen Informationen bezüglich der Beziehung zwischen den Bildaufnahmen (Eingabe) und der Kennzeichnung (Ausgabe), die verwendet werden können, um die Kennzeichnung für eine neue Bildaufnahme vorherzusagen.

Eine Kreuzvalidierungsmethode kann verwendet werden, um die Daten in Trainings- und Validierungsdatensätze aufzuteilen. Der Trainingsdatensatz wird beim Backpropagations-Training der Netzwerkgewichte verwendet. Der Validierungsdatensatz wird verwendet, um zu überprüfen, mit welcher Vorhersagegenauigkeit sich das trainierte Netzwerk auf unbekannte Bildaufnahmen anwenden lässt.

Die vorliegende Erfindung wird vorzugsweise mit Hilfe eines oder mehrerer Computer ausgeführt. Ein "Computer" ist eine Vorrichtung zur elektronischen Datenverarbeitung, die mittels programmierbarer Rechenvorschriften Daten verarbeitet. Das heute allgemein angewandte Prinzip, das auch als Von-Neumann-Architektur bezeichnet wird, definiert für einen Computer fünf Hauptkomponenten: das Rechenwerk (im Wesentlichen die arithmetisch-logische Einheit (ALU)), das Steuerwerk, die Buseinheit, das Speicherwerk sowie die Eingabe-/Ausgabewerk(e). In den heutigen Computern sind die ALU und die Steuereinheit meistens zu einem Baustein verschmolzen, der so genannten CPU (Central Processing Unit, zentraler Prozessor).

Als "Peripherie" bezeichnet man in der Computertechnik alle Geräte, die an den Computer angeschlossen sind und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computer von heute werden häufig in Desktop-PCs, Portable PCs, Laptops, Notebooks, Netbooks und Tablet-PCs und so genannte Handhelds (z.B. Smartphone) unterteilt; alle diese Systeme können zur Ausführung der Erfindung genutzt werden.

Die Eingaben in den Computer erfolgen über Eingabemittel wie beispielsweise eine Tastatur, eine Maus, ein berührungsempfindlicher Bildschirm (Touchdisplay), ein Mikrofon und/oder dergleichen. Als Eingabe soll auch die Auswahl eines Eintrags aus einem virtuellen Menü oder einer virtuellen Liste oder das Anklicken eines Auswahlkästchens und dergleichen verstanden werden.

Die Ausgabe erfolgt üblicherweise über einen Bildschirm, einen Drucker, einen Lautsprecher und/oder durch Speicherung in einem Datenspeicher.

Die erfindungsgemäße Vorrichtung ist vorzugsweise ein Computer, der mittels programmierbarer Rechenvorschriften konfiguriert ist, die folgenden Schritte durchzuführen:
- Empfangen von digitalen Bildaufnahmen über eine Eingabeeinheit, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
- Versehen der digitalen Bildaufnahmen derjenigen Objekte, die der ersten Klasse zugeordnet sind, mit einer ersten Kennzeichnung durch eine Steuer- und Recheneinheit, wobei die erste Kennzeichnung anzeigt, dass die Objekte auf den Bildaufnahmen die mindestens eine definierte Vorgabe erfüllen,
- Anzeigen der digitalen Bildaufnahmen derjenigen Objekte, die der zweiten Klasse zugordnet sind, gegenüber einem oder mehreren Nutzern über eine Ausgabeeinheit,
- Empfangen einer Information für jede angezeigte digitale Bildaufnahme von dem einen oder den mehreren Nutzern über die Eingabeeinheit, wobei die Information angibt, ob das jeweilige Objekt die mindestens eine definierte Vorgabe erfüllt oder die mindestens eine definierte Vorgabe nicht erfüllt,
- Versehen der angezeigten digitalen Bildaufnahme mit einer Kennzeichnung durch die Steuer- und Recheneinheit, wobei die Bildaufnahmen derjenigen Objekte, für die die Information angibt, dass die Objekte die mindestens eine definierte Vorgabe erfüllen, mit der ersten Kennzeichnung versehen werden, und die Bildaufnahmen derjenigen Objekte, für die die Information angibt, dass die Objekte die mindestens eine definierte Vorgabe nicht erfüllen, mit einer zweiten Kennzeichnung gekennzeichnet werden,
- Speichern der gekennzeichneten Bildaufnahmen in einem Datenspeicher und/oder Zuführen der Bildaufnahmen mit den jeweiligen Kennzeichnungen einem selbstlernenden Modell zur Klassierung von Objekten als Trainings- und/oder Validierungsdatensatz.

Die Erfindung wird nachfolgend anhand von Beispielen und Zeichnungen weiter erläutert, ohne die Erfindung auf die in den Beispielen verwendeten und in den Zeichnungen dargestellten Merkmale und Merkmalskombinationen einschränken zu wollen.

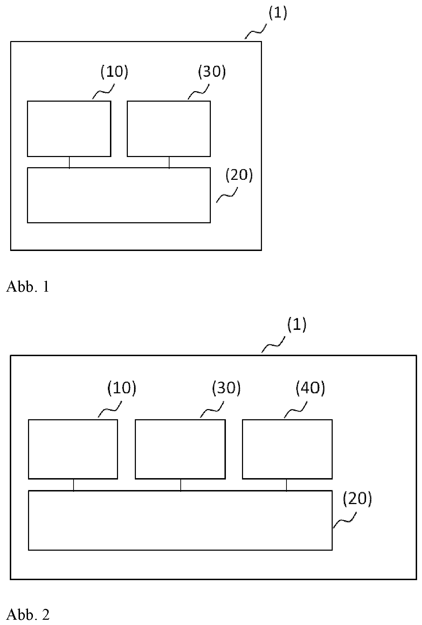

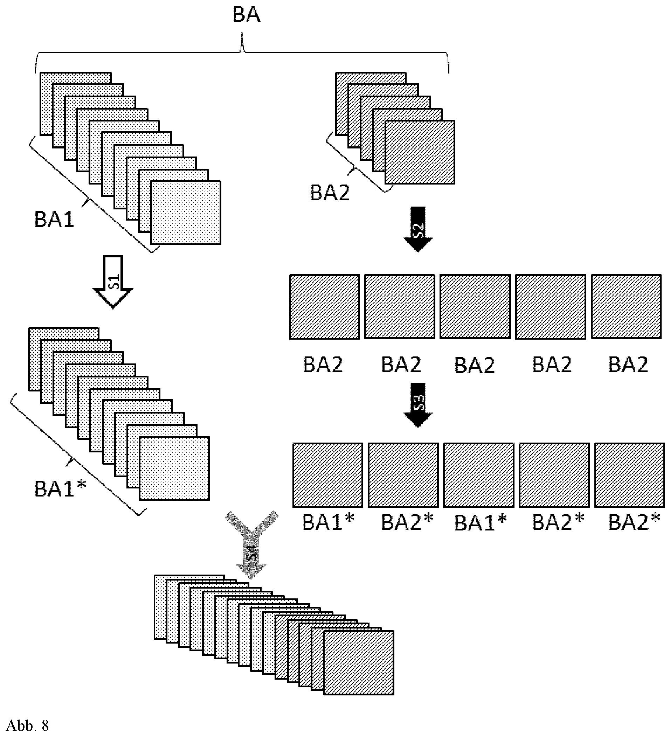

Abb. 1 zeigt beispielshaft und schematisch eine Ausführungsform der erfindungsgemäßen Vorrichtung. Die Vorrichtung (1) umfasst eine Empfangseinheit (10), eine Steuer- und Recheneinheit (20) und eine Ausgabeeinheit (30). Über die Empfangseinheit (10) können digitale Bildaufnahmen von Objekten empfangen werden. Die Steuer- und Recheneinheit (20) ist konfiguriert, empfangene Bildaufnahmen über die Ausgabeeinheit (30) gegenüber einem Nutzer der Vorrichtung (1) anzuzeigen. Ferner ist die Steuer- und Recheneinheit (20) konfiguriert, für angezeigte Bildaufnahmen vom Nutzer eine Information über die Eingabeeinheit (10) zu empfangen. Ferner ist die Steuer- und Recheneinheit (20) konfiguriert, Bildaufnahmen mit einem Kennzeichen zu versehen. Die von der erfindungsgemäßen Vorrichtung (1) vorgenommene Verarbeitung der empfangenen Bildaufnahmen ist in Abb. 8 näher dargestellt.

Abb. 2 zeigt beispielshaft und schematisch eine weitere Ausführungsform der erfindungsgemäßen Vorrichtung. Für die in Abb. 2 gezeigte Vorrichtung (1) gilt das, was für die in Abb. 1 gezeigte Vorrichtung beschrieben wurde. Die Vorrichtung (1) umfasst ferner einen Datenspeicher (40), in dem die gekennzeichneten Bilddateien gespeichert werden können.

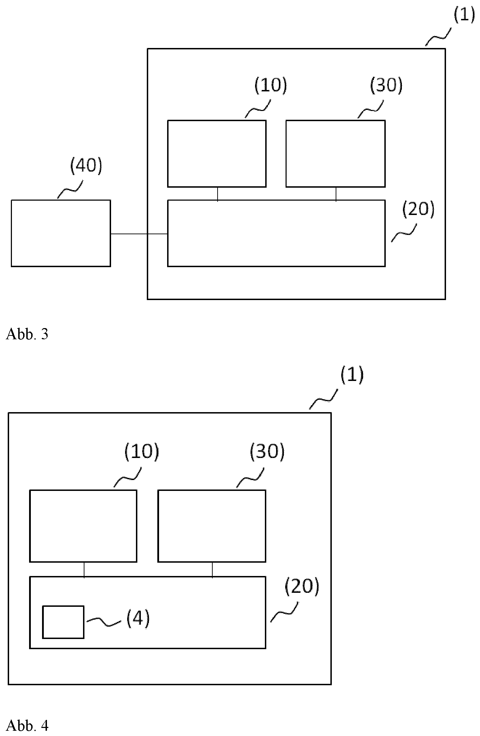

Abb. 3 zeigt beispielshaft und schematisch eine weitere Ausführungsform der erfindungsgemäßen Vorrichtung. Für die in Abb. 3 gezeigte Vorrichtung (1) gilt das, was für die in Abb. 1 gezeigte Vorrichtung beschrieben wurde. Die Vorrichtung (1) ist mit einem separaten Datenspeicher (40) verbunden, in dem die gekennzeichneten Bilddateien gespeichert werden können.

Abb. 4 zeigt beispielshaft und schematisch eine weitere Ausführungsform der erfindungsgemäßen Vorrichtung. Für die in Abb. 4 gezeigte Vorrichtung (1) gilt das, was für die in Abb. 1 gezeigte Vorrichtung beschrieben wurde. Die Steuer- und Recheneinheit (20) der Vorrichtung (1) umfasst einen selbstlernenden Algorithmus (4) zur Klassierung von Objekten. Der selbstlernende Algorithmus (4) kann mit den gekennzeichneten Bildaufnahmen in einem überwachten Lernverfahren trainiert und/oder mit den gekennzeichneten Bildaufnahmen validiert werden.

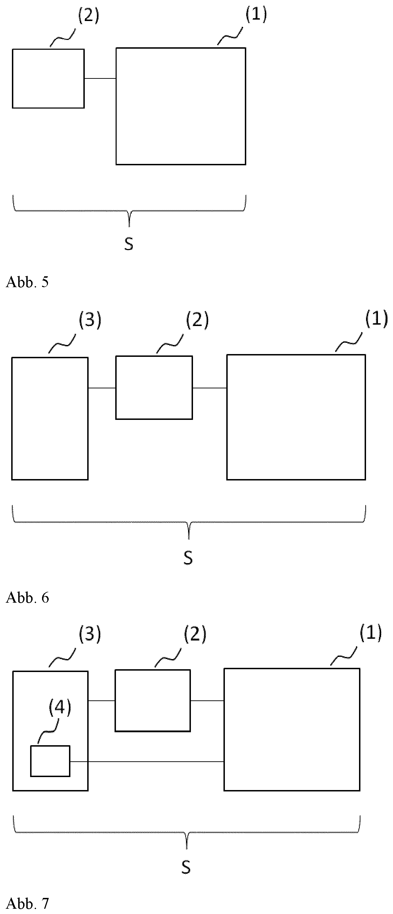

Abb. 5 zeigt beispielshaft und schematisch eine Ausführungsform des erfindungsgemäßen Systems. Das System S umfasst eine Vorrichtung (1) wie sie in einer der Abb. 1, 2, 3 oder 4 gezeigt ist, und eine Kamera (2) zur Erzeugung von digitalen Bildaufnahmen einer Mehrzahl von Objekten.

Abb. 6 zeigt beispielhaft und schematisch eine weitere Ausführungsform des erfindungsgemäßen Systems. Das System S umfasst eine Vorrichtung (1), wie sie in einer der Abb. 1, 2, 3 oder 4 gezeigt ist, eine Kamera (2) zur Erzeugung von digitalen Bildaufnahmen einer Mehrzahl von Objekten und eine Klassierungseinheit (3). Die Klassierungseinheit (3) ist konfiguriert, eine automatische Klassierung der Objekte anhand mindestens eines optischen Merkmals durchzuführen, wobei anhand des mindestens einen optischen Merkmals automatisch geprüft wird, ob das jeweilige Objekt mindestens eine definierte Vorgabe erfüllt oder ob es einer visuellen Kontrolle unterzogen werden soll.

Abb. 7 zeigt beispielhaft und schematisch eine weitere Ausführungsform des erfindungsgemäßen Systems. Das System S umfasst eine Vorrichtung (1), wie sie in einer der Abb. 1, 2 oder 3 gezeigt ist, eine Kamera (2) zur Erzeugung von digitalen Bildaufnahmen einer Mehrzahl von Objekten und eine Klassierungseinheit (3). Die Klassierungseinheit (3) ist konfiguriert, eine automatische Klassierung der Objekte anhand mindestens eines optischen Merkmals durchzuführen, wobei anhand des mindestens einen optischen Merkmals automatisch geprüft wird, ob das jeweilige Objekt mindestens eine definierte Vorgabe erfüllt oder ob es einer visuellen Kontrolle unterzogen werden soll. Die Klassierungseinheit (3) umfasst einen selbstlernenden Algorithmus (4) zur Klassierung von Objekten. Der selbstlernende Algorithmus (4) kann mit den gekennzeichneten Bildaufnahmen in einem überwachten Lernverfahren trainiert und/oder optimiert und/oder mit den gekennzeichneten Bildaufnahmen validiert werden.

Abb. 8 zeigt beispielhaft und schematisch die Verarbeitung der Bildaufnahmen gemäß der vorliegenden Erfindung.

Die Bildaufnahmen BA lassen sich in mindestens zwei Gruppen einteilen. Eine erste Gruppe von Bildaufnahmen BA1 zeigt Objekte, die eine definierte Vorgabe erfüllen. Eine zweite Gruppe von Bildaufnahmen BA2 zeigt Objekte, die einer visuellen Kontrolle durch einen Menschen zugeführt werden sollen.

Die Bildaufnahmen BA1 werden im Schritt S1 mit einem ersten Kennzeichen BA1* versehen. Die erste Kennzeichnung BA1* gibt an, dass das in der jeweiligen Bildaufnahme gezeigte Objekt eine definierte Vorgabe erfüllt.

Die Bildaufnahmen BA2 werden im Schritt S2 einzeln einem Nutzer gegenüber angezeigt. Im Schritt 3 sichtet der Nutzer die Bildaufnahmen, prüft dabei, ob die in den Bildaufnahmen gezeigten Objekte die definierte Vorgabe erfüllen und kennzeichnet die Bildaufnahmen entsprechend: die Bildaufnahmen, die Objekte zeigen, bei denen die definierte Vorgabe erfüllt ist, werden mit der ersten Kennzeichnung BA1* versehen; die Bildaufnahmen, die Objekte zeigen, bei denen die definierte Vorgabe nicht erfüllt ist, werden mit einer zweiten Kennzeichnung BA2* versehen. Die zweite Kennzeichnung BA2* gibt damit an, dass die Objekte, die in den Bildaufnahmen gezeigt sind, (gemäß der visuellen Kontrolle) die definierte Vorgabe nicht erfüllen.

In Schritt S4 werden die gekennzeichneten Bildaufnahmen in einem Datenspeicher gespeichert.

Schritt S4 folgt nach den Schritten S1 und S3. Schritt S3 erfolgt nach Schritt S2. Schritt S1 kann vor Schritt S2, parallel zu Schritt S2, nach Schritt S2, parallel zu Schritt S3 oder nach Schritt S3 erfolgen.

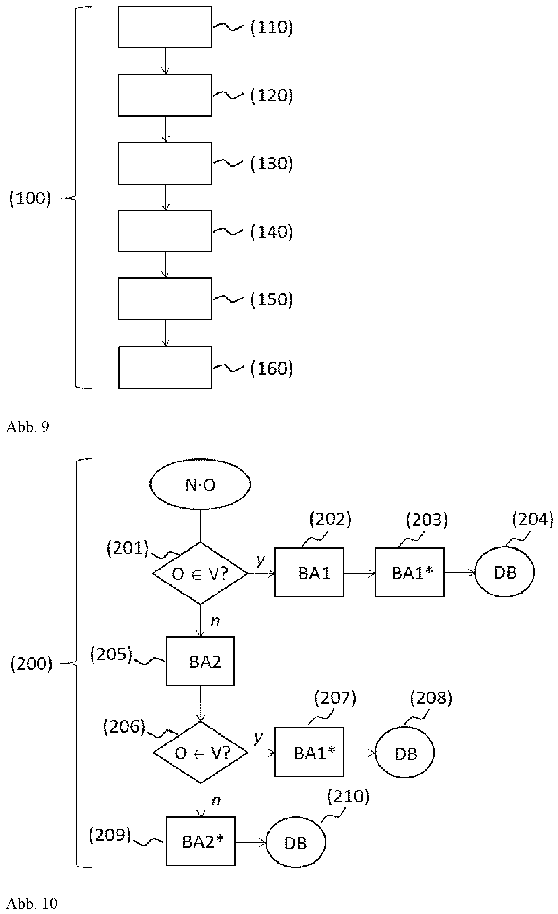

Abb. 9 zeigt schematisch in Form eines Ablaufdiagramms eine Ausführungsform des erfindungsgemäßen Verfahrens.

Das Verfahren (100) umfasst die folgenden Schritte:
(110) Empfangen von digitalen Bildaufnahmen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
(120) Versehen der digitalen Bildaufnahmen derjenigen Objekte, die der ersten Klasse zugeordnet sind, mit einer ersten Kennzeichnung, wobei die erste Kennzeichnung anzeigt, dass die Objekte auf den Bildaufnahmen die mindestens eine definierte Vorgabe erfüllen,
(130) Anzeigen der digitalen Bildaufnahmen derjenigen Objekte, die der zweiten Klasse zugordnet sind, gegenüber einem oder mehreren Nutzern,
(140) Empfangen einer Information für jede angezeigte digitale Bildaufnahme von dem einen oder den mehreren Nutzern, wobei die Information angibt, ob das jeweilige Objekt die mindestens eine definierte Vorgabe erfüllt oder die mindestens eine definierte Vorgabe nicht erfüllt,
(150) Versehen der angezeigten digitalen Bildaufnahme mit einer Kennzeichnung, wobei die Bildaufnahme desjenigen Objekts, für das die Information angibt, dass das Objekt die mindestens eine definierte Vorgabe erfüllt, mit der ersten Kennzeichnung versehen werden, und die Bildaufnahme desjenigen Objekts, für das Information angibt, dass das Objekt die mindestens eine definierte Vorgabe nicht erfüllt, mit einer zweiten Kennzeichnung gekennzeichnet werden,
(160) Speichern der gekennzeichneten Bildaufnahmen in einem Datenspeicher und/oder Zuführen der Bildaufnahmen mit den jeweiligen Kennzeichnungen einem selbstlernenden Modell zur Klassierung von Objekten als Trainings- und/oder Validierungsdatensatz.

Abb. 10 zeigt ein Fließbild für eine Ausführungsform des erfindungsgemäßen Verfahrens. Ausgangspunkt des Verfahrens ist eine Anzahl N an Objekten O (N·O). Für jedes einzelne Objekt wird in Schritt (201) automatisch geprüft, ob das Objekt eine definierte Vorgabe (V) erfüllt (O∈V?).

Für den Fall, dass das Objekt die definierte Vorgabe erfüllt ("*y*"), wird von dem Objekt in Schritt (202) eine digitale Bildaufnahme BA1 erzeugt und diese Bildaufnahme in Schritt (203) mit einer ersten Kennzeichnung BA1* versehen. Die so gekennzeichnete Bildaufnahme wird in Schritt (204) in einem Datenspeicher (DB) gespeichert.

Für den Fall, dass das Objekt die definierte Vorgabe nicht erfüllt oder nicht eindeutig erfüllt ("*n*"), wird von dem Objekt in Schritt (205) eine digitale Bildaufnahme BA2 erzeugt und diese Bildaufnahme in Schritt (206) einem Nutzer angezeigt, damit der Nutzer in einer visuellen Kontrolle prüft, ob das in der digitalen Bildaufnahme gezeigte Objekt die definierte Vorgabe (V) erfüllt (O∈V?). Für den Fall, dass das Objekt die definierte Vorgabe erfüllt ("*y*"), wird die Bildaufnahme in Schritt (207) mit der ersten Kennzeichnung (BA1*) versehen und die gekennzeichnete Bildaufnahme in Schritt (208) in dem Datenspeicher (DB) gespeichert. Für den Fall, dass das Objekt die definierte Vorgabe nicht erfüllt ("*n*"), wird die Bildaufnahme in Schritt (209) mit einer zweiten Kennzeichnung (BA2*) versehen und die gekennzeichnete Bildaufnahme in Schritt (210) in dem Datenspeicher (DB) gespeichert.

Nachfolgend wird ein Anwendungsbeispiel für die vorliegende Erfindung beschrieben. Bei den Objekten handelt es sich in diesem Beispiel um Glasampullen. Für diese Glasampullen soll geprüft werden, ob sie unversehrt (d.h. beispielsweise keine Risse oder Sprünge enthalten) und sauber sind. Die definierte Vorgabe (Soll-Zustand) ist also eine saubere, unversehrte Glasampulle.

Mittels eines optischen Verfahrens wird für die einzelnen Glasampullen geprüft, ob sie sauber und unversehrt sind. Dazu wird aus einer Quelle für elektromagnetische Strahlung sichtbares Licht von einer Seite durch die jeweilige Glasampulle geleitet. Ein optischer Sensor auf der gegenüberliegenden Seite misst die transmittierte Strahlung. Sprünge, Kratzer, Risse und/oder Verunreinigungen führen dazu, dass weniger Strahlung transmittiert wird, da ein Teil der Strahlung durch die Sprünge, Kratzer, Risse und/oder Verunreinigungen absorbiert und/oder in andere Richtungen gestreut wird. Anhand der Intensität der transmittierten Strahlung kann also geprüft werden, ob die jeweilige Glasampulle unversehrt und sauber ist.

Die Glasampullen werden nacheinander vermessen. Liegt die Intensität der transmittierten Strahlung (optisches Merkmal) oberhalb eines empirisch ermittelten Schwellenwerts, ist die jeweilige Glasampulle sauber und unversehrt. Liegt die Intensität nicht oberhalb des Schwellenwerts, ist die jeweilige Glasampulle wahrscheinlich verdreckt und/oder nicht unversehrt. Für die Glasampullen, die wahrscheinlich verdreckt und/oder nicht unversehrt sind, soll eine Nachkontrolle durch einen Menschen erfolgen. Die Nachkontrolle erfolgt unter Verwendung von digitalen Bildaufnahmen, die von den Glasampullen erzeugt werden.

Es werden von allen Glasampullen digitale Bildaufnahmen erzeugt. Die Bildaufnahmen derjenigen Glasampullen, die sauber und unversehrt sind, werden mit einer ersten Kennzeichnung versehen. Die erste Kennzeichnung gibt an, dass die Glasampullen in den Bildaufnahmen sauber und unversehrt sind.

Die Bildaufnahmen der Glasampullen, die wahrscheinlich verdreckt und/oder nicht unversehrt sind, werden einem Nutzer gegenüber auf einem Monitor angezeigt. Der Nutzer gibt für jede angezeigte Bildaufnahme an, ob die jeweilig angezeigte Glasampulle sauber und unversehrt ist. Für den Fall, dass sie sauber und unversehrt ist, wird die Bildaufnahme mit der ersten Kennzeichnung versehen. Für den Fall, dass sie nicht sauber und/oder nicht unversehrt ist, wird die Bildaufnahme mit einer zweiten Kennzeichnung versehen. Die zweite Kennzeichnung gibt an, dass die jeweilig gezeigte Glasampulle nicht sauber und/oder nicht unversehrt ist.

Die gekennzeichneten Bildaufnahmen werden in einem Datenspeicher gespeichert und/oder einem selbstlernenden Algorithmus zum Klassieren von Glasampullen als Trainings- und/oder Validierungsdatensatz zugeführt.

## Patentansprüche

1. Verfahren umfassend die folgenden Schritte:
a) Erzeugen von digitalen Bildaufnahmen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
b) Versehen der digitalen Bildaufnahmen derjenigen Objekte, die der ersten Klasse zugeordnet sind, mit einer ersten Kennzeichnung, wobei die erste Kennzeichnung angibt, dass die Objekte auf den Bildaufnahmen die mindestens eine definierte Vorgabe erfüllen,
c) Anzeigen der digitalen Bildaufnahmen derjenigen Objekte, die der zweiten Klasse zugordnet sind, gegenüber einem oder mehreren Nutzern,
d) Empfangen einer Information für jede angezeigte digitale Bildaufnahme von dem einen Nutzer oder den mehreren Nutzern, wobei die Information angibt, ob das jeweilige Objekt die mindestens eine definierte Vorgabe erfüllt oder die mindestens eine definierte Vorgabe nicht erfüllt,
e) Versehen der angezeigten digitalen Bildaufnahme mit einer Kennzeichnung, wobei die Bildaufnahmen derjenigen Objekte, für die die Information angibt, dass die Objekte die mindestens eine definierte Vorgabe erfüllen, mit der ersten Kennzeichnung versehen werden, und die Bildaufnahmen derjenigen Objekte, für die die Information angibt, dass die Objekte die mindestens eine definierte Vorgabe nicht erfüllen, mit einer zweiten Kennzeichnung gekennzeichnet werden,
f) Speichern der gekennzeichneten Bildaufnahmen in einem Datenspeicher und/oder Zuführen der Bildaufnahmen mit den jeweiligen Kennzeichnungen einem selbstlernenden Modell zur Klassierung von Objekten als Trainings- und/oder Validierungsdatensatz.

2. Verfahren gemäß Anspruch 1, ferner umfassend den Schritt:
- Klassieren von Objekten in mindestens zwei Klassen, eine erste Klasse und eine zweite Klasse, wobei die erste Klasse diejenigen Objekte beinhaltet, die mindestens eine definierte Vorgabe erfüllen und die zweite Klasse diejenigen Objekte beinhaltet, die einer visuellen Kontrolle unterzogen werden sollen,
wobei dieser Schritt zumindest den in Anspruch 1 genannten Schritten b), c), d), e) und f) zeitlich vorgelagert ist.

3. Verfahren gemäß Anspruch 2, wobei das Klassieren automatisiert auf Basis mindestens eines optischen Merkmals erfolgt, das mit einem oder mehreren optischen Sensoren automatisch erfasst wird.

4. Verfahren gemäß Anspruch 2 oder 3, wobei die Schritte in der folgenden Reihenfolge ablaufen:
1. Klassieren von Objekten in mindestens zwei Klassen, eine erste Klasse und eine zweite Klasse, wobei die erste Klasse diejenigen Objekte beinhaltet, die mindestens eine definierte Vorgabe erfüllen und die zweite Klasse diejenigen Objekte beinhaltet, die einer visuellen Kontrolle unterzogen werden sollen,
2. Erzeugen von digitalen Bildaufnahmen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
3. Versehen der digitalen Bildaufnahmen derjenigen Objekte, die der ersten Klasse zugeordnet sind, mit einer ersten Kennzeichnung, wobei die erste Kennzeichnung angibt, dass die Objekte auf den Bildaufnahmen die mindestens eine definierte Vorgabe erfüllen,
4. Anzeigen der digitalen Bildaufnahmen derjenigen Objekte, die der zweiten Klasse zugordnet sind, gegenüber einem oder mehreren Nutzern,
5. Empfangen einer Information für jede angezeigte digitale Bildaufnahme von dem einen Nutzer oder den mehreren Nutzern, wobei die Information angibt, ob das jeweilige Objekt die mindestens eine definierte Vorgabe erfüllt oder die mindestens eine definierte Vorgabe nicht erfüllt,
6. Versehen der angezeigten digitalen Bildaufnahme mit einer Kennzeichnung, wobei die Bildaufnahmen derjenigen Objekte, für die die Information angibt, dass die Objekte die mindestens eine definierte Vorgabe erfüllen, mit der ersten Kennzeichnung versehen werden, und die Bildaufnahmen derjenigen Objekte, für die die Information angibt, dass die Objekte die mindestens eine definierte Vorgabe nicht erfüllen, mit einer zweiten Kennzeichnung gekennzeichnet werden,
7. Speichern der gekennzeichneten Bildaufnahmen in einem Datenspeicher und/oder Zuführen der Bildaufnahmen mit den jeweiligen Kennzeichnungen einem selbstlernenden Modell zur Klassierung von Objekten als Trainings- und/oder Validierungsdatensatz.

5. Verfahren gemäß Anspruch 2 oder 3, wobei die Schritte in der folgenden Reihenfolge ablaufen:
1. Erzeugen von digitalen Bildaufnahmen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
2. Klassieren der Objekte in mindestens zwei Klassen, eine erste Klasse und eine zweite Klasse, wobei die erste Klasse diejenigen Objekte beinhaltet, die mindestens eine definierte Vorgabe erfüllen und die zweite Klasse diejenigen Objekte beinhaltet, die einer visuellen Kontrolle unterzogen werden sollen,
3. Versehen der digitalen Bildaufnahmen derjenigen Objekte, die der ersten Klasse zugeordnet sind, mit einer ersten Kennzeichnung, wobei die erste Kennzeichnung angibt, dass die Objekte auf den Bildaufnahmen die mindestens eine definierte Vorgabe erfüllen,
4. Anzeigen der digitalen Bildaufnahmen derjenigen Objekte, die der zweiten Klasse zugordnet sind, gegenüber einem oder mehreren Nutzern,
5. Empfangen einer Information für jede angezeigte digitale Bildaufnahme von dem einen Nutzer oder den mehreren Nutzern, wobei die Information angibt, ob das jeweilige Objekt die mindestens eine definierte Vorgabe erfüllt oder die mindestens eine definierte Vorgabe nicht erfüllt,
6. Versehen der angezeigten digitalen Bildaufnahme mit einer Kennzeichnung, wobei die Bildaufnahmen derjenigen Objekte, für die die Information angibt, dass die Objekte die mindestens eine definierte Vorgabe erfüllen, mit der ersten Kennzeichnung versehen werden, und die Bildaufnahmen derjenigen Objekte, für die die Information angibt, dass die Objekte die mindestens eine definierte Vorgabe nicht erfüllen, mit einer zweiten Kennzeichnung gekennzeichnet werden,
7. Speichern der gekennzeichneten Bildaufnahmen in einem Datenspeicher und/oder Zuführen der Bildaufnahmen mit den jeweiligen Kennzeichnungen einem selbstlernenden Modell zur Klassierung von Objekten als Trainings- und/oder Validierungsdatensatz.

6. Verfahren gemäß Anspruch 2 oder 3, wobei mindestens zwei der folgenden Schritte parallel ablaufen:
- Erzeugen von digitalen Bildaufnahmen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
- Klassieren der Objekte in mindestens zwei Klassen, eine erste Klasse und eine zweite Klasse, wobei die erste Klasse diejenigen Objekte beinhaltet, die mindestens eine definierte Vorgabe erfüllen und die zweite Klasse diejenigen Objekte beinhaltet, die einer visuellen Kontrolle unterzogen werden sollen,
- Versehen der digitalen Bildaufnahmen derjenigen Objekte, die der ersten Klasse zugeordnet sind, mit einer ersten Kennzeichnung, wobei die erste Kennzeichnung angibt, dass die Objekte auf den Bildaufnahmen die mindestens eine definierte Vorgabe erfüllen,

7. Verfahren gemäß einem der Ansprüche 1 bis 6, wobei das selbstlernende Modell ein künstliches neuronales Netz - vorzugsweise ein Convolutional Neural Network - ist oder ein solches umfasst.

8. Vorrichtung umfassend
• eine Empfangseinheit,
• eine Steuer- und Recheneinheit und
• eine Ausgabeeinheit,
- wobei die Steuer- und Recheneinheit konfiguriert ist, die Empfangseinheit zu veranlassen, digitale Bildaufnahmen zu empfangen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
- wobei die Steuer- und Recheneinheit konfiguriert ist, die Bildaufnahmen der Objekte der ersten Klasse mit einer ersten Kennzeichnung zu versehen, wobei die erste Kennzeichnung angibt, dass die Objekte auf den Bildaufnahmen die mindestens eine definierte Vorgabe erfüllen,
- wobei die Steuer- und Recheneinheit konfiguriert ist, die Ausgabeeinheit zu veranlassen, die Bildaufnahmen der Objekte der zweiten Klasse gegenüber einem Nutzer anzuzeigen,
- wobei die Steuer- und Recheneinheit konfiguriert ist, die Empfangseinheit zu veranlassen vom Nutzer zu angezeigten Bildaufnahmen eine Information zu empfangen, wobei die Information angibt, ob das jeweilige Objekt die mindestens eine definierte Vorgabe erfüllt oder die mindestens eine definierte Vorgabe nicht erfüllt,
- wobei die Steuer- und Recheneinheit konfiguriert ist, auf Basis der empfangenen Information die jeweils angezeigte Bildaufnahme mit einer Kennzeichnung zu versehen, wobei die Bildaufnahme desjenigen Objekts, für das die Information angibt, dass das Objekt die mindestens eine definierte Vorgabe erfüllt, mit der ersten Kennzeichnung versehen wird, und die Bildaufnahme desjenigen Objekts, für das die Information angibt, dass das Objekt die mindestens eine definierte Vorgabe nicht erfüllt, mit einer zweiten Kennzeichnung gekennzeichnet wird,
- wobei die Steuer- und Recheneinheit konfiguriert ist, die gekennzeichneten Bildaufnahmen in einem Datenspeicher zu speichern und/oder als Trainings- und/oder Validierungsdatensatz einem selbstlernenden Modell zur Klassierung von Objekten zuzuführen.

9. Vorrichtung gemäß Anspruch 8, wobei das selbstlernende Modell ein künstliches neuronales Netz - vorzugsweise ein Convolutional Neural Network - ist oder ein solches umfasst.

10. System umfassend eine Kamera zur Erzeugung von digitalen Bildaufnahmen von Objekten und eine Vorrichtung gemäß Anspruch einem der Ansprüche 8 oder 9.

11. Computerprogrammprodukt umfassend ein Computerprogramm, das in einen Arbeitsspeicher eines Computers geladen werden kann und dort den Computer dazu veranlasst, folgende Schritte auszuführen:
- Empfangen von digitalen Bildaufnahmen, wobei jede digitale Bildaufnahme ein Objekt zeigt, wobei das gezeigte Objekt einer von mindestens zwei Klassen zugeordnet ist, wobei eine erste Klasse Objekte beinhaltet, die mindestens eine definierte Vorgabe erfüllen, und eine zweite Klasse Objekte beinhaltet, die einer visuellen Kontrolle unterzogen werden sollen,
- Versehen der digitalen Bildaufnahmen derjenigen Objekte, die der ersten Klasse zugeordnet sind, mit einer ersten Kennzeichnung, wobei die erste Kennzeichnung angibt, dass die Objekte auf den Bildaufnahmen die mindestens eine definierte Vorgabe erfüllen,
- Anzeigen der digitalen Bildaufnahmen derjenigen Objekte, die der zweiten Klasse zugordnet sind, gegenüber einem oder mehreren Nutzern,
- Empfangen einer Information für jede angezeigte digitale Bildaufnahme von dem einen Nutzer oder den mehreren Nutzern, wobei die Information angibt, ob das jeweilige Objekt die mindestens eine definierte Vorgabe erfüllt oder die mindestens eine definierte Vorgabe nicht erfüllt,
- Versehen der angezeigten digitalen Bildaufnahme mit einer Kennzeichnung, wobei die Bildaufnahmen derjenigen Objekte, für die die Information angibt, dass die Objekte die mindestens eine definierte Vorgabe erfüllen, mit der ersten Kennzeichnung versehen werden, und die Bildaufnahmen derjenigen Objekte, für die die Information angibt, dass die Objekte die mindestens eine definierte Vorgabe nicht erfüllen, mit einer zweiten Kennzeichnung gekennzeichnet werden,
- Speichern der gekennzeichneten Bildaufnahmen in einem Datenspeicher und/oder Zuführen der Bildaufnahmen mit den jeweiligen Kennzeichnungen einem selbstlernenden Modell zur Klassierung von Objekten als Trainings- und/oder Validierungsdatensatz.

12. Computerprogrammprodukt gemäß Anspruch 11, das in einen Arbeitsspeicher eines Computers geladen werden kann und dort den Computer dazu veranlasst, einen oder mehrere der in den Ansprüchen 1 bis 7 genannten Schritte auszuführen.
